# EUROPÄISCHE PATENTANMELDUNG

(11) **EP 2 918 165 A1**
(43) Veröffentlichungstag der Anmeldung: **16.09.2015**
(21) Anmeldenummer: 15158045.3
(22) Anmeldetag: 06.03.2015
(51) Int. Cl.: A01J 25/13

(54) **Pressdeckel für eine Käseform**

(30) Priorität: 11.03.2014 CH 3622014
(71) Anmelder: Kalt Maschinenbau AG, 9604 Lütisburg (CH)
(72) Erfinder: Waldburger, Peter, 9246 Niederbüren (CH)
(74) Vertreter: Patentbüro Paul Rosenich AG

(57) **Zusammenfassung**

Die Erfindung betrifft Pressdeckel für eine Käseform, insbesondere für eine Käseform (1, 12) aus Metall mit einem runden oder mehreckigen Querschnitt, wobei der Pressdeckel (1) in Form und Abmessungen dem inneren Querschnitt der Käseform (1) entspricht. er soll einfach aufgebaut sein, einem hohen Pressdruck standhalten und auch hohen hygienischen Anforderungen genügen.

Dies ist dadurch gelöst, dass der Pressdeckel (1) ein Lochblech (22) umfasst und auf dem Umfang des Pressdeckels (21) ein Rahmen (30) vorgesehen ist, an dessen Aussenseite ein beweglicher Aussenring (33) angeordnet ist, der beim Abpressen von Käserohmasse dichtend an der inneren Wandung der Käseform (1, 12) anliegt. Der Pressdeckel (21) ist weiterhin mit einer versteifende Rahmen- und Rippenstruktur (23, 24, 30) versehen.

## Beschreibung

Die Erfindung betrifft einen Pressdeckel für eine Käseform, insbesondere für eine Käseform aus Metall mit einem runden oder mehreckigen Querschnitt, die wiederum in einer Kassettenpresse oder dergleichen angeordnet ist.

Eine Vorrichtung zur industriellen Herstellung von Käselaiben ist z. B. aus der EP-A-350777 bekannt. Diese umfasst eine Einschwemmpresse mit einer rechteckigen und oben offenen Wanne zur Aufnahme von Formen, ein Säulengestell zur Anordnung eines heb- und senkbaren Presskopfes und eines Verteilkopfes zur Zuführung und Dosierung der Käserohmasse in die Formen und einen, auf der Wanne verfahrbaren Portalwagen zur Führung des Verteilkopfes und zur Handhabung eines Wendemechanismus' für die Formen. Verteilkopf wie Wendemechanismus müssen dabei manuell bereitgestellt resp. gewechselt werden. Die Wandung der Form besteht aus einem Lochblech und mehrere Formen können in Sätzen angeordnet sein. An den Endflächen eines Satzes sind zylindrische Zapfen zum andocken einer Handhabungseinrichtung vorgesehen.

Die EP-A-406899 zeigt eine Weiterbildung einer solchen Vorrichtung, bei der die Formen in Kassetten aufgenommen sind, die wiederum kompakt und reihenartig in der Wanne angeordnet sind. Oberhalb der Formen ist ein Presskopf mit auf die Formen ausgerichteten Pressstempeln zum Pressen der Käserohmasse vorgesehen.

Die eigentliche Pressform ist dabei von einem topfförmigen Mantel mit einem Luftzufuhrkanal umgeben (EP-B-1269832). Dadurch wird ein Luftkanal gebildet und durch die zugeführte Luft kann die an den Sieblöchern des Lochblechs der Form anhaftende Käsemasse nach dem Pressen von der Jerbseite gelöst werden.

Nach der EP-B-543185 ist ein Form- bzw. Pressdeckel über eine Kippeinrichtung selbstzentrierend mit dem Pressstempel verbindbar, so dass infolge möglicher Kippbewegungen ein Ansaugen des Formdeckels an der Käsemasse vermieden wird. Die Form selbst ist rund oder viereckig und kann aus einem äusseren Behälter und einem inneren, gelochten Mantel bestehen.

Eine weitere Käseform mit einer perforierten Formwand aus Metall ist in der DE-B-1030612 offenbart. Diese Formwand weist an ihrer inneren Oberfläche gleichmässig verteilte, niedrige Erhöhungen und Vertiefungen bis ca.1 mm auf, die die Käserinde bei Entnahme des Käselaibs nicht beschädigen sollen, selbst wenn der Käse aus der Form geschlagen wird. Eine solche Käseform mit perforierter Wandung kann nach DE-C-2823182 auch aus Kunststoff bestehen, an deren Innenseite zueinander parallele Riefen mit dreieckigem Querschnitt vorgesehen sind. Im Übergangs- und einteiligen Bodenbereich sind die Riefen durch Rippen mit Unterbrechungen getrennt. Derartige Formwände oder Doppelböden sind aufwändig in der Reinigung.

Der Erfindung liegt die Aufgabe zugrunde, einen Pressdeckel für eine Käseform, insbesondere eine Käseform aus Metall, geeignet zur Anordnung am Presskopf einer Kassettenpresse oder dergleichen zu entwickeln, der einfach aufgebaut ist, einem hohen Pressdruck standhält und der auch hohen hygienischen Anforderungen genügt.

Die Aufgabe ist mit den Merkmalen des Patentanspruchs 1 gelöst.

Ein erfindungsgemässer Pressdeckel besteht im Wesentlichen aus einem Lochblech, das in Form und Abmessungen dem inneren Querschnitt einer Käseform entspricht und einer, darauf befindlichen, versteifenden Rahmen- und Rippenstruktur, die dem Pressdeckel die notwendige Steifigkeit verleiht. Auf dem Umfang des Pressdeckels ist ein an der Aussenseite eines Rahmens ein beweglicher Aussenring, bevorzugt ein Kunststoffring angeordnet, der beim Anpressen eine gute Dichtung zur inneren Wandung der Käseform bewirkt.

Der erfindungsgemässe Pressdeckel ermöglicht einerseits einen guten Molkeabfluss und ist andererseits leicht und vollständig von beiden Seiten her reinigbar. Er ist insbesondere zum Abpressen von hochgepresstem Käse, d. h. von Hartkäse geeignet.

Solcher hochgepresster Käse bedingt Presszeiten bis ca. 18 Stunden bei vergleichsweise hoher Presstemperatur. Hierbei sollen Schnüre, Späne oder Verhärtungen gepresster Käsemasse, die nur schwer entfernbar sind vermieden werden.

Vorbekannte Pressdeckel bestehen hingegen zum Beispiel aus einem steifen Deckelblech aus Stahl, in Form und Abmessungen dem inneren Querschnitt einer Käseform entsprechend und einem, an der Unterseite des Deckelblechs angeordneten, dünnen Lochblech. Das Deckelblech weist zudem eine Anzahl grösserer Öffnungen zum Abfluss von Molke beim Abpressen von Käserohmasse auf.

Im den ungelochten Bereichen des Deckelblechs können sich Molke- und Käsereste oder andere Verunreinigungen ablagern, die nicht sichtbar und nur schwer entfernbar sind.

Bevorzugte Ausgestaltungen sind in den abhängigen Ansprüchen offenbart.

Der Aussenring resp. Kunststoffring ist an der Unterseite einer Ringführung heb- und senkbar geführt angeordnet. Eine Führungsfläche ist winklig zur Pressrichtung angeordnet, so dass der Aussenring ohne Verkanten vertikal beweglich ist und mit einem Vorsprung dichtend an der Innenwand der Käseform anliegen kann. Beim Anheben des Pressdeckels kann der Aussenring wiederum geführt nach unten gleiten, was einerseits ein besseres ablösen des Pressdeckels von der Innenwand der Käseform und andererseits eine gute Reinigbarkeit des Umfangsbereichs des Pressdeckels.

Während des Pressvorgangs ist die Unterseite des Aussenrings im Wesentlichen bündig zum Lochblech.

Der Aussenring kann auch segmentiert ausgebildet sein.

Die Rippenstruktur ist an dünnen Stegen unlösbar mit dem Lochblech verbunden. Lochblech und Rippenstruktur bestehen bevorzugt aus einem rostfreien Stahl.

Das Lochblech ist bevorzugt ein Feinlochblech, insbesondere aus Conidur®, die Rippenstruktur ist aus einem rostfreien Stahl gebildet. Die Öffnungen des Lochblechs sind bevorzugt ca. 0,1mm breit und ca. 0,3mm lang.

Bei runden Käseformen erstrecken sich einzelne Rippen in Form von Streben über den Mittelpunkt verlaufend bevorzugt strahlenförmig bzw. radial von der Längsachse der Form ausgehend über das Lochblech bis zum Umfang. Sie kreuzen dabei ringförmig angeordnete Querrippen und sind mit diesen verbunden, wobei mehrere Ringe mit unterschiedlichen Durchmessern beabstandet voneinander vorgesehen sein können. Bei mehreckigen wie auch bei runden Käseformen sind anstelle der Ringe auch Streben parallel zu den Aussenkanten möglich.

Die Rippenstruktur weist weiterhin nach oben gerichtete Ösen oder dergleichen auf, die eine Anordnung des Pressdeckels zum Beispiel an einem Presskopf ermöglichen.

Die Wandung der Käseform selbst ist einteilig und bevorzugt im Übergangs- und Bodenbereich an der äusseren Wand mit einer Rippenstruktur versehen.

Die Rippenstruktur ist auf runde wie eckige Formen anwendbar, mit entsprechenden Adaptionen.

Bei runden Formen erstrecken sich einzelne Rippen bevorzugt strahlenförmig bzw. radial von der Längsachse der Form ausgehend über den Boden bis in den Bereich der Mantelwand oder auch bis zum oberen Rand der Mantelwand. Bevorzugt werden die Rippen im Bodenbereich durch ringförmig angeordnete Querrippen, wobei mehrere Ringe mit unterschiedlichen Durchmessern beabstandet voneinander vorgesehen sein können. Doch können einer weiteren Ausführungsform die Rippen auch parallel zueinander angeordnet sein.

Bei rechteckigen Formen sind Rippen zumindest parallel zueinander angeordnet, wobei quer dazu weitere, ebenfalls parallel zueinander angeordnete Querrippen vorgesehen sein können.

Die Festigkeit und die Stabilität der Käseform werden erhöht, der Boden ist visuell kontrollierbar, insbesondere bzgl. Hygiene und Reinigung. Die bisher übliche Doppelwand des Bodens kann dadurch entfallen, was es auch ermöglicht, auf das einblasen von Luft zur Ablösung des Käselaibs zu verzichten.

Die Rippen sind so dimensioniert, dass die Aussenmasse bestehender Kassetten für die Aufnahmen von Käseformen unverändert bleiben können.

Die Erfindung wird nachfolgend in einem Ausführungsbeispiel näher beschrieben. In der Zeichnung zeigen die
- Fig. 1:: eine runde Käseform,
- Fig. 2:: einen erfindungsgemässen Pressdeckel für eine runde Käseform,
- Fig. 3:: eine rechteckige Käseform,
- Fig. 4:: einen erfindungsgemässen Pressdeckel für eine eckige Käseform,
- Fig. 5:: einen Aussenring des Pressdeckels nach Fig. 2 oder 4,
- Fig. 6:: den Aussenring nach Fig. 5 in unterer Endlage,
- Fig. 7:: eine weitere Ausführungsform einer runden Käseform.

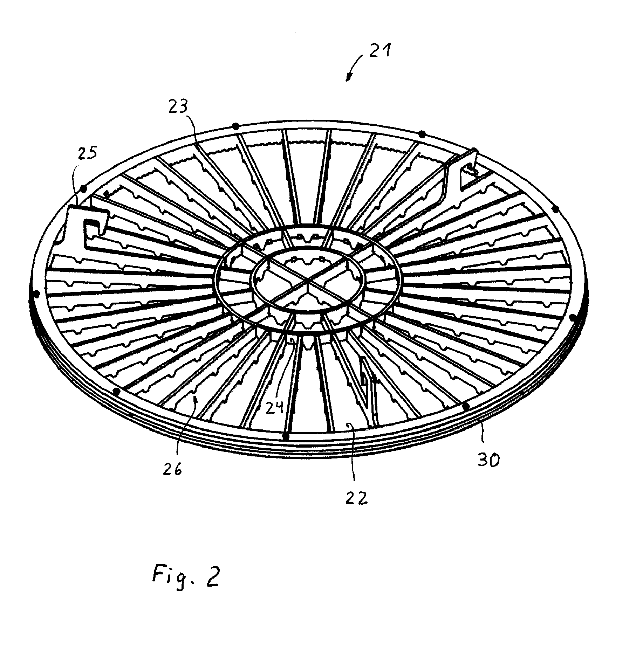

Ein erfindungsgemässer Pressdeckel 21 (Fig. 2) für eine runde Käseform 1 besteht aus einem Lochblech 22, bevorzugt ein Feinlochblech, zum Beispiel aus Conidur®, das im Umfangsbereich von einem Rahmen 30 mit einem Aussenring 33 in Form eines Kunststoffrings umgeben ist und dass in Form und Abmessungen dem inneren Querschnitt der Käseform 1 entspricht. Er besteht weiterhin aus einer, darauf befindlichen, versteifenden Rippenstruktur 23, 24 aus einem rostfreien Stahl, die dem Pressdeckel 21 die notwendige Steifigkeit für das Abpressen von Molke verleiht. Die Rippenstruktur 23, 24 ist an dünnen Stegen 26 unlösbar mit dem Lochblech 22 verbunden, insbesondere verschweisst.

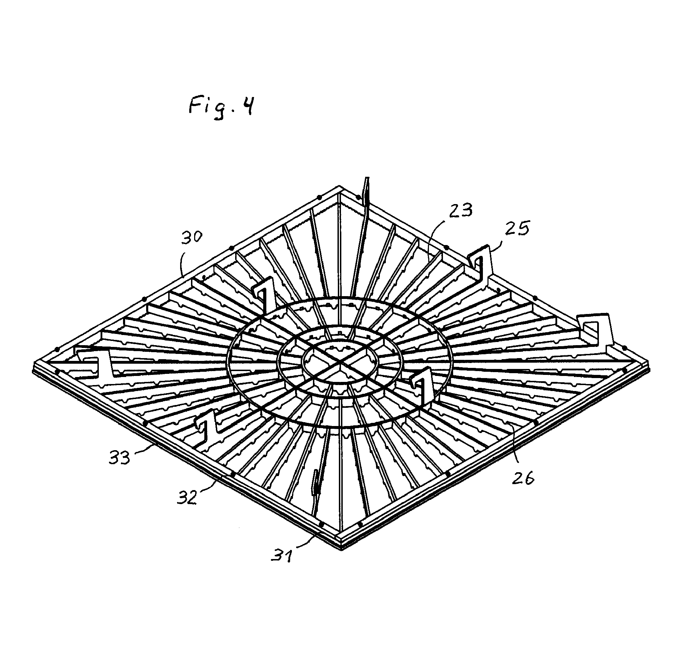

Bei der runden Käseform 1 erstrecken sich einzelne Rippen in Form von Streben 23 über den Mittelpunkt verlaufend bevorzugt strahlenförmig bzw. radial von der Längsachse der Form ausgehend über das Lochblech 22 bis zum Rahmen 30 (Fig. 2). Sie kreuzen dabei ringförmig angeordnete Ringe resp. Querrippen 24 und sind mit diesen an den Kreuzungspunkten verbunden, wobei mehrere Ringe mit unterschiedlichen Durchmessern beabstandet voneinander vorgesehen sein können. Angepasst an die Grundform sind rechteckige Pressformdeckel 21 analog aufgebaut (Fig. 4).

Der Aussenring 33 resp. Kunststoffring ist im Rahmen 30 an der Unterseite einer Ringführung 31 heb- und senkbar geführt angeordnet. Eine Führungsfläche 37 der Ringführung 31 ist winklig zur Pressrichtung angeordnet, so dass der Aussenring 33 ohne Verkanten vertikal beweglich ist und mit einem Vorsprung 38 dichtend an der Innenwand der Käseform 1, 12 anliegen kann. Der Aussenring 33 ist mit einer winkelgleichen Gegenfläche 36 zur Führungsfläche 37 versehen. Zusätzlich sind im Aussenring 33 voneinander beabstandete Bolzen 32 angeordnet, die in einer Führungsbohrung etwa parallel zur Pressrichtung geführt angeordnet sind.

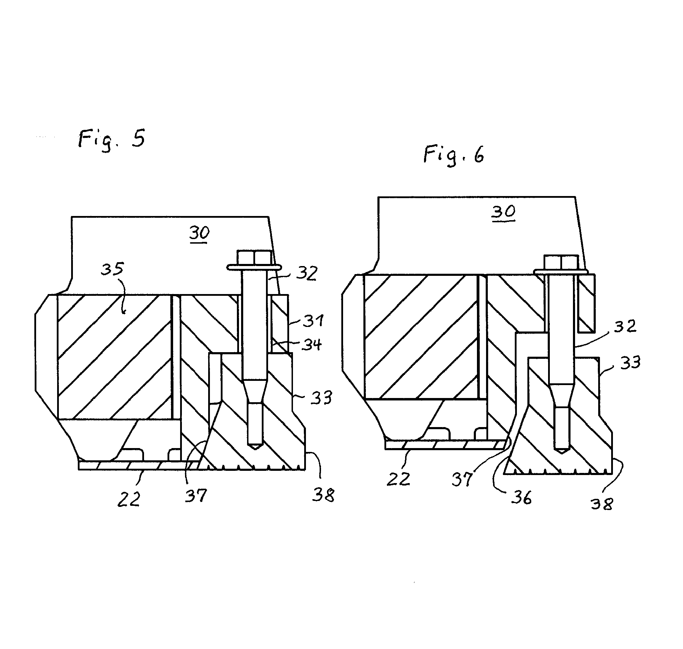

Beim Abpressen der Käserohmasse befindet sich die Unterseite des Aussenrings 33 bündig zum Lochblech 22 gelegen (Fig. 5). Aussen am Aussenring 33 ist ein Vorsprung 38 vorgesehen, der beim Anpressen eine gute Dichtung zur inneren Wandung der Käseform 1, 12 bewirkt.

Beim Anheben des Pressdeckels 21 kann der Aussenring 33 wiederum geführt nach unten gleiten (Fig. 6), was einerseits ein besseres ablösen des Pressdeckels 21 von der Innenwand der Käseform 1, 12 und andererseits eine gute Reinigbarkeit des Umfangsbereichs des Pressdeckels 21 ermöglicht. Beim Anheben fällt der Aussenring 33 ca. 3mm nach unten und es bildet sich ein Spalt 39, der nachfolgend gut spülbar ist. Durch diese Fallbewegung ergibt sich zudem eine selbstschneidende Wirkung gegenüber der Käseoberfläche.

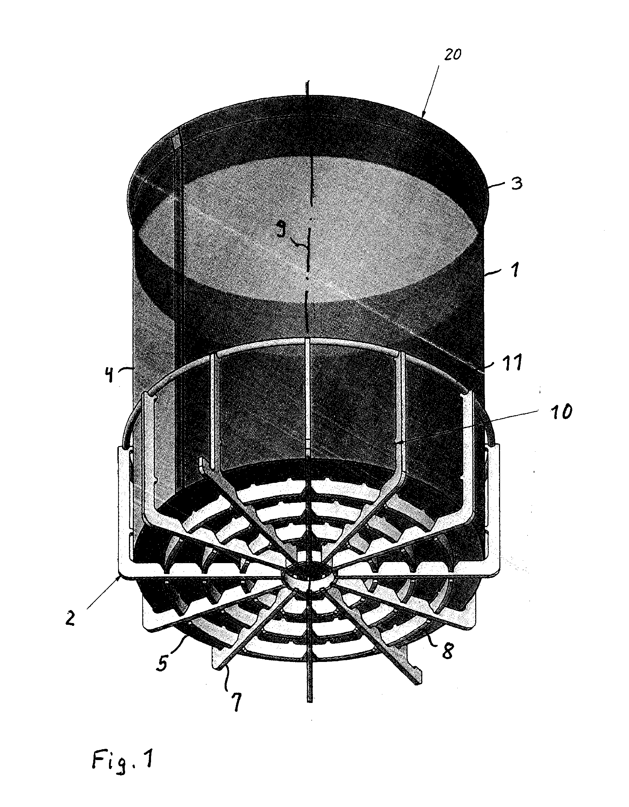

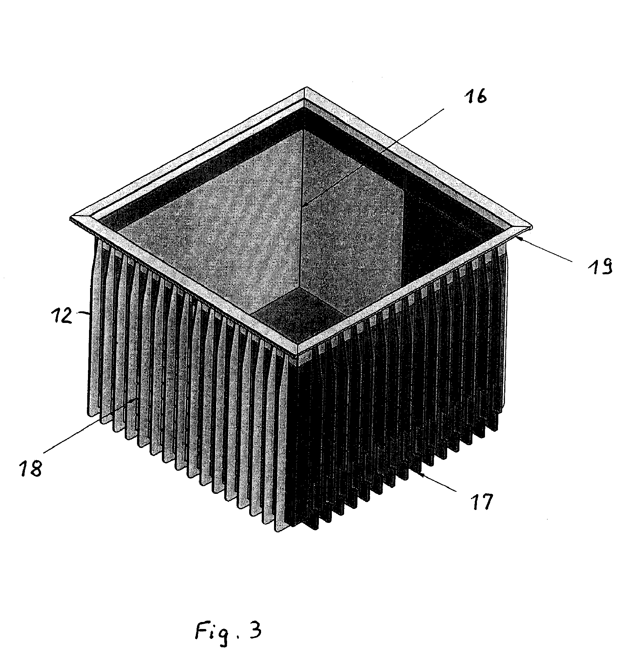

Erfindungsgemässe Käseformen 1, 12 (Fig. 1 bzw. 3) aus Metall, insbesondere einem rostfreien Stahl gelangen in bekannten, nicht dargestellten Kassettenpressen zum Einsatz. Eine solche Kassettenpresse dient in an sich bekannter Weise dem flüssigkeitsverringernden Pressen von Käserohmasse und umfasst
- eine in der Draufsicht rechteckige und oben offene Wanne mit in der Draufsicht rechteckigen, oben offenen Kassetten, die in Reihen quer zur Längsrichtung der Wanne nebeneinander angeordnet sind,
- runde oder viereckige Käseformen zur Aufnahme der zu pressenden Käserohmasse, die in den Kassetten angeordnet sind, und die zumindest einen Boden und einen Mantel mit mindestens einem Auslass für die abzupressende Flüssigkeit aufweisen, wobei eine Kassette mindestens eine Käseform 12 aufnimmt und zumindest der Boden der Käseform 12 mit einer Rippenstruktur versehen ist, und wobei die Käseformen auch Teil der Kassette sein können,
- einen, auf Endsäulen gelagerten Presskopf mit einer Vielzahl, auf die Käseformen ausgerichteten Pressstempel zum Pressen der Käserohmasse, z. B. entsprechend der Offenbarung der EP-B-543899 oder CH 704208 A ausgebildet, sowie ggf. Niederhalter zum abdrücken des Presskopfes von den Kassetten,

- ein Rohrverteilsystem resp. einen Abfüllapparat zum Einschwemmen der Käserohmasse in die Käseformen 12,
- mindestens eine Handhabungseinrichtung, die entlang der Längsseiten der Wanne verfahrbar ist, zum anheben, verfahren zu und ablegen einer Kassetten auf einer Fördereinrichtung ausserhalb der Wanne,
- eine Einrichtung zum drehen/wenden der Kassette bzw. Kassettenreihe um deren Längsachse.

Bevorzugt kann der Kassettenpresse weiterhin ein, oberhalb der Fördereinrichtung horizontal angeordneter und federnd gelagerter Rüttler z. B. in Form eines Spannrahmens zur Aufnahme einer Kassette zugeordnet sein. Erst nach einer Rüttelung werden die Käselaibe auf die Fördereinrichtung entleert.

Eine runde Form 1 gemäss Fig. 1 umfasst einen zylindischen Mantel 4 mit einem oberen Korb 3 und einen Boden 5, der bis in den Übergangsbereich der äusseren Mantelwand hinein mit der Rippenstruktur 2 versehen ist.

Längsrippen 7 erstrecken sich radial, von der Längsachse 9 ausgehend über den Boden 5 und fortgesetzt als Mantelrippen 10 bis in den Bereich der Mantelwand. Die Enden der Mantelrippen 10 sind mit einem Mantelring 11 verschweisst. Die Längsrippen 7 sind im Bodenbereich mit Ringen 8 stoff- und/oder formschlüssig verbunden, wobei mehrere Ringe 8 mit unterschiedlichen Durchmessern, beabstandet voneinander vorgesehen sind. Ein innerer Ring 8 begrenzt die Ausdehnung der Längsrippen 7 zur Längsachse 9 hin.

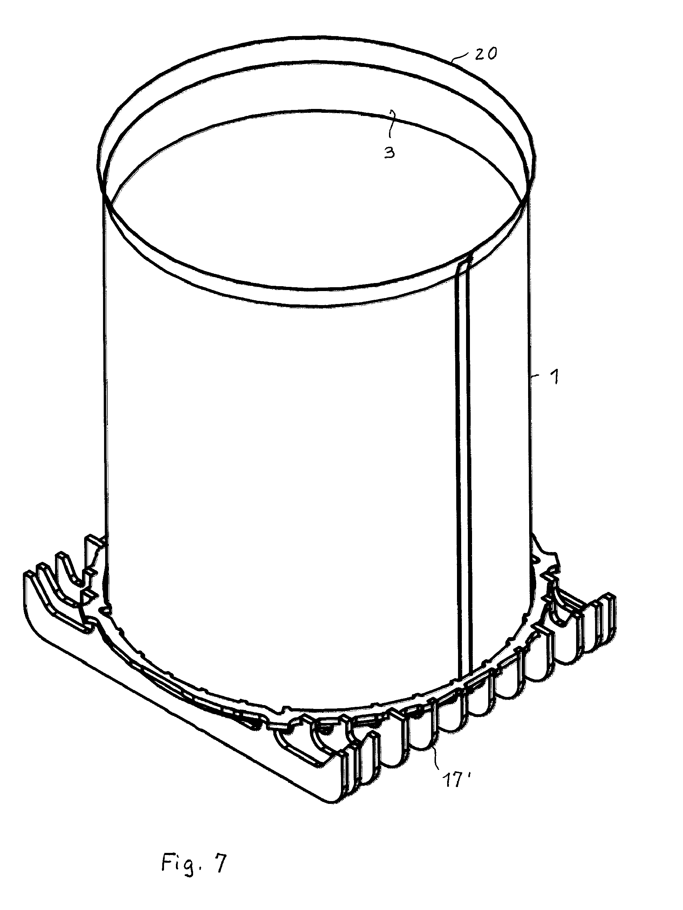

In anderer Ausgestaltung können die Rippen aber auch parallel zueinander als Längsrippen 17' angeordnet sein (Fig. 7), analog zu Längsrippen 17 bei rechteckigen Käseformen 12 und weisen dabei keine ringförmigen Rippen auf.

Rechteckige Formen 12 weisen Längs- und Mantelrippen 17, 18 auf, die bevorzugt parallel zueinander angeordnet sind, wobei quer dazu weitere, ebenfalls parallel zueinander angeordnete Längs- und Mantelrippen 17, 18 vorgesehen sind.

Die Mantelrippen 18 können bis zu einem, den oberen Rand des Mantels 16 bildenden Korb 19 reichen. Die rechteckige Form 12 kann aber auch ohne Korb 19 ausgebildet sein.

Bei runden wie eckigen Formen 1, 12 können die Rippen mittels Punktschweissung mit dem Mantel und Boden verbunden sein. Hierzu weisen die Rippen dann vorstehende Nasen auf und an jeder Nase wird punktgeschweisst. Trotz des einteiligen Bodens und Mantels weisen die Formen eine hohe Festigkeit, insbesondere zur Aufnahme der Presskräfte auf.

Die einzelnen Formen 1, 12 werden in an sich bekannter Weise im Bodenbereich von Kassetten angeordnet.

Die Rippen sind so dimensioniert, dass die Aussenmasse bestehender Kassetten für die Aufnahmen von Formen unverändert bleiben können.

Die einzelnen Formen 1 werden in an sich bekannter Weise im Bodenbereich von Kassetten angeordnet. Eine Kassette besteht zumindest aus einem Rahmen, der aus Streben, an denen Antriebszentrierzapfen zum aufnehmen und wenden der Kassette sowie Zentrierzapfen für die Wanne resp. den Spannrahmen vorgesehen sind.

Zumindest der Mantel 4, 16 der Käseform besteht aus einem Lochblech. Die Lochung muss der Bedingung genügen, dass der Molkeabfluss geringer sein muss als der Zufluss an Käserohmasse. Nur so ist gewährleistet, dass sich der Käsebruch immer unterhalb des Molkespiegels befindet. Nur so können Lufteinschlüsse (Blindeinschüsse) im Käse vermieden werden. Die Öffnungen des Lochblechs sind bevorzugt ca. 0,1mm breit und ca. 0,3mm lang zwecks Meidung von Haarbildung.

Für hoch zu pressenden Käse, d. h. Hartkäse besteht die Mantelwand und ggf. auch der Boden aus Feinlochblech Conidur®. Infolge der spezifischen Lochung kann die Bildung von "Haaren" vermieden werden, wie sie bei Kunststoffformen oder normalen, dickeren Lochblechen auftritt.

Bei der Abpressung von Weichkäse oder Halbhartkäse kann hingegen eine konventionelle Lochung ausreichend sein.

Das Lochblech kann oberhalb des Korbs 3 einen Molkerand 20 mit einer gröberen Lochung als der übrige Mantel 4, 16 aufweisen, insbesondere bei der Herstellung von Hartkäse. Bei weicherem Käse ist eine unterschiedliche Lochung des Mantels 4, 16 nicht zwingend.

Die Käseformen können grundsätzlich auch aus einem Kunststoff bestehen.

### Bezugszeichenliste:

- 1: Käseform
- 2: Rippenstruktur
- 3: Korb
- 4: Mantel
- 5: Boden
- 7: Längsrippe
- 8: Ring
- 9: Längsachse
- 10: Mantelrippe
- 11: Mantelring
- 12: Käseform
- 16: Mantel
- 17: Längsrippe
- 18: Mantelrippe
- 19: Korb
- 20: Molkerand
- 21: Pressdeckel
- 22: Lochblech
- 23: Strebe
- 24: Querrippe, Ring
- 25: Öse
- 26: Steg
- 30: Rahmen
- 31: Ringführung
- 32: Bolzen
- 33: Aussenring
- 34: Führungsbohrung
- 35: Innenring
- 36: Gleitfläche
- 37: Führungsfläche
- 38: Vorsprung

## Patentansprüche

1. Pressdeckel für eine Käseform, insbesondere für eine Käseform (1, 12) aus Metall mit einem runden oder mehreckigen Querschnitt, wobei der Pressdeckel (21) in Form und Abmessungen dem inneren Querschnitt der Käseform (1, 12) entspricht,
**dadurch gekennzeichnet, dass** er ein Lochblech (22) umfasst und auf dem Umfang des Pressdeckels (21) ein Rahmen (30) vorgesehen ist, an dessen Aussenseite ein beweglicher Aussenring (33) angeordnet ist, der beim Abpressen von Käserohmasse dichtend an der inneren Wandung der Käseform (1, 12) anliegt, und dass der Pressdeckel (21) mit einer versteifende Rahmen- und Rippenstruktur (23, 24, 30) versehen ist.

2. Pressdeckel nach Anspruch 1, **dadurch gekennzeichnet, dass** der Aussenring (33) aus einem Kunststoff besteht.

3. Pressdeckel nach Anspruch 1 oder 2, **dadurch gekennzeichnet, dass** der Aussenring (33) heb- und senkbar an einer Ringführung (31) des Rahmens (30) geführt angeordnet ist.

4. Pressdeckel nach Anspruch 3, **dadurch gekennzeichnet, dass** an der Ringführung (31) eine dem Aussenring (33) zugewandte Führungsfläche 37 winklig zur Pressrichtung vorgesehen ist und dass der Aussenring (33) mit einer winkelgleichen Gegenfläche (36) zur Führungsfläche (37) versehen ist.

5. Pressdeckel nach einem der Ansprüche 1 bis 4, **dadurch gekennzeichnet, dass** am Umfang des Aussenrings (33) ein Vorsprung (38) vorhanden ist.

6. Pressdeckel nach Anspruch 1, **dadurch gekennzeichnet, dass** die Rippenstruktur (23, 24) Rippen in Form von Streben (23), die über den Mittelpunkt bevorzugt strahlenförmig bzw. radial von der Längsachse der Käseform (1, 12) ausgehend über das Lochblech (22) bis zum Rahmen (30) verlaufen und dabei ringförmig angeordnete Ringe resp. Querrippen (24) kreuzen und an den Kreuzungspunkten mit diesen verbunden sind, wobei mehrere Ringe mit unterschiedlichen Durchmessern beabstandet voneinander vorgesehen sein können.

7. Pressdeckel nach Anspruch 1 oder 6, **dadurch gekennzeichnet, dass** das Lochblech (22) bevorzugt ein Feinlochblech ist und dass die Rippenstruktur (23, 24) aus einem rostfreien Stahl gebildet ist.

8. Pressdeckel nach einem der Ansprüche 1, 6 oder 7, **dadurch gekennzeichnet, dass** die Rippenstruktur (23, 24) an dünnen Stegen (26) unlösbar mit dem Lochblech (22) verbunden ist.

9. Pressdeckel nach einem der Ansprüche 1 oder 6 bis 8, **dadurch gekennzeichnet, dass** die Käseform (1, 12) einen Boden und einen Mantel (4, 16) aufweist, wobei der Boden bis in den Übergangsbereich der äusseren Mantelwand hinein mit einer Rippenstruktur versehen ist, und dass die Käseform (1, 12) im Querschnitt rund bzw. zylindrisch oder mehreckig sein kann.

10. Pressdeckel nach einem der Ansprüche 1 bis 9, **dadurch gekennzeichnet, dass** die Käseform (1, 12) aus Kunststoff oder Metall, bevorzugt einem rostfreien Stahl besteht.
